# EUROPÄISCHE PATENTSCHRIFT

(11) **EP 0 710 534 B1**
(45) Veröffentlichungstag und Bekanntmachung des Hinweises auf die Patenterteilung: **10.04.2002**
(21) Anmeldenummer: 95113881.7
(22) Anmeldetag: 05.09.1995
(51) Int. Cl.: B29C 45/14

(54) **Verfahren und Vorrichtung zur Herstellung von Bürstenkörpern aus mindestens zwei Kunststoffkomponenten**
Method and apparatus for manufacturing brush bodies of at least two plastic components
Procédé et dispositif pour fabriquer des corps de brosse à partir d'au moins deux composants de matière plastique

(30) Priorität: 04.11.1994 DE 4439431
(43) Veröffentlichungstag der Anmeldung: 08.05.1996
(73) Patentinhaber: M + C SCHIFFER GmbH, D-53577 Neustadt (DE)
(72) Erfinder: Lanvers, Andreas, Dr.-Ing., D-53604 Bad Honnef (DE)
(74) Vertreter: Grünecker, Kinkeldey, Stockmair & Schwanhäusser Anwaltssozietät

(56) Entgegenhaltungen:
- EP-A- 0 678 368
- DE-A- 3 512 192
- DE-A- 4 127 621

## Beschreibung

Die Erfindung bezieht sich auf ein Verfahren zur Herstellung von bereichsweise aus mindestens zwei Kunststoffkomponenten gebildeten Bürstenkörpern mit einem mehrere Borstenbündel aufweisenden Borstenfeld für Zahnbürsten oder dgl. Borstenwaren, bei dem in einem aus mindestens zwei Gruppen von Formnestern bestehenden Spritzgußwerkzeug zunächst in der ersten Gruppe von Formnestern die Bürstengrundkörper weitgehend aus der ersten Kunststoffkomponente gespritzt werden und bei dem danach die Bürstengrundkörper über eine im Bereich des Borstenfeldes angreifende Borstenhalterung zur zweiten Gruppe von Formnestern bewegt werden und dort die zweite Kunststoffkomponente eingespritzt wird sowie auf eine Vorrichtung zur Durchführung des Verfahrens.

Insbesondere bei hochwertigen Zahnbürsten wird der Borstenkörper vielfach aus mindestens zwei unterschiedlich eingefärbten und/oder unterschiedliche Eigenschaften aufweisenden Kunststoffkomponenten gespritzt. Dabei wird zunächst ein sogenannter Bürstengrundkörper aus einer ersten beispielsweise kompakten, ausreichende Festigkeitseigenschaften aufweisenden Kunststoffkomponente in einer Gruppe von Formnestern gespritzt. Sodann müssen diese Bürstengrundkörper in eine weitere Form gebracht werden, deren Formnester nach dem Einsetzen der Bürstengrundkörper noch einen Freiraum aufweisen, der dann mit der zweiten Kunststoffkomponente ausgefüllt wird.

Um die Bürstengrundkörper von der ersten Gruppe der Formnester in die zweite Gruppe der Formnester zu bewegen, werden besondere Halterungen verwendet, die in dem Spritzgußwerkzeug mit integriert sind und die die Bürstengrundkörper bei geöffnetem Spritzgußwerkzeug entweder durch Hinterschneidung teilweise umfassen oder mittels Stifte in die Sacklöcher für die später einzubringenden Borstenbündel eingreifen. Bei einem sogenannten Wendewerkzeug, bei dem die beiden Gruppen von Formnestern beispielsweise um 180° gegeneinander versetzt angeordnet sind, ist die Halterung normalerweise axial verschiebbar und drehbar ausgebildet.

Ein Erfassen der zunächst nur aus dem Bürstengrundkörper bestehenden Bürstenkörper mittels an der Halterung vorgesehenen Lochstiften ist grundsätzlich nur dann möglich, wenn die Sacklöcher für die Aufnahme der Borstenbündel beim Spritzvorgang in der ersten Gruppe der Formnester mit hergestellt werden. Werden beispielsweise die Borstenbündel bereits beim ersten Spritzvorgang mit eingesetzt, fällt eine solche Ausgestaltung der Halterung aus. Die Erfassung der Bürstengrundkörper nach dem Spritzvorgang mit der ersten Kunststoffkomponente über entsprechende Hinterschneidungen in der Halterung ist verhältnismäßig unsicher, da die Hinterschneidungen einerseits so groß sein müssen, daß möglichst eine gute Erfassung der Bürstengrundkörper möglich ist, andererseits aber so kleingehalten werden sollen, daß keine Markierungen am Bürstenkörper zurückbleiben.

Ein Verfahren der eingangs genannten Art ist aus der EP 0 678 368 A1 bekannt, die gemäß Art. 54(3) EPÜ zum Stand der Technik gehört. Eine äußere Handlingeinrichtung übernimmt dort den Transport der Lochfeldplatten zwischen den Spritzgießstationen ebenso wie von der Beborstungsstation zu den Spritzgießstation und zur Abführung des Fertigproduktes.

Der Erfindung liegt die Aufgabe zugrunde, ein Verfahren zur Herstellung von bereichsweise aus mindestens zwei Kunststoffkomponenten gebildeten Bürstenkörpers aufzuzeigen, welches in vorteilhafter Weise ein Bewegen bzw. Transportieren der Bürstengrundkörper von der ersten Gruppe der Formnester zur zweiten Gruppe der Formnester ermöglicht.

Diese Aufgabe wird hinsichtlich des Verfahrens und der Vorrichtung durch die Merkmale der Ansprüche 1 und 5 gelöst.

Bevorzugte Ausgestaltungen der Erfindung sind in den Unteransprüchen dargelegt.

Die Erfindung wird nachfolgend anhand eines in einer Zeichnung in stark vereinfachter Weise dargestellten Ausführungsbeispieles näher erläutert. Dabei zeigen
- Fig.1: ein geschlossenes Spritzgußwerkzeug im Schnitt,
- Fig.2: das Spritzgußwerkzeug der Fig.1 in geöffnetem Zustand und
- Fig.3: eine ausschnittsweise Vergrößerung einer Borstenhalterung mit einem Bürstenkörper.

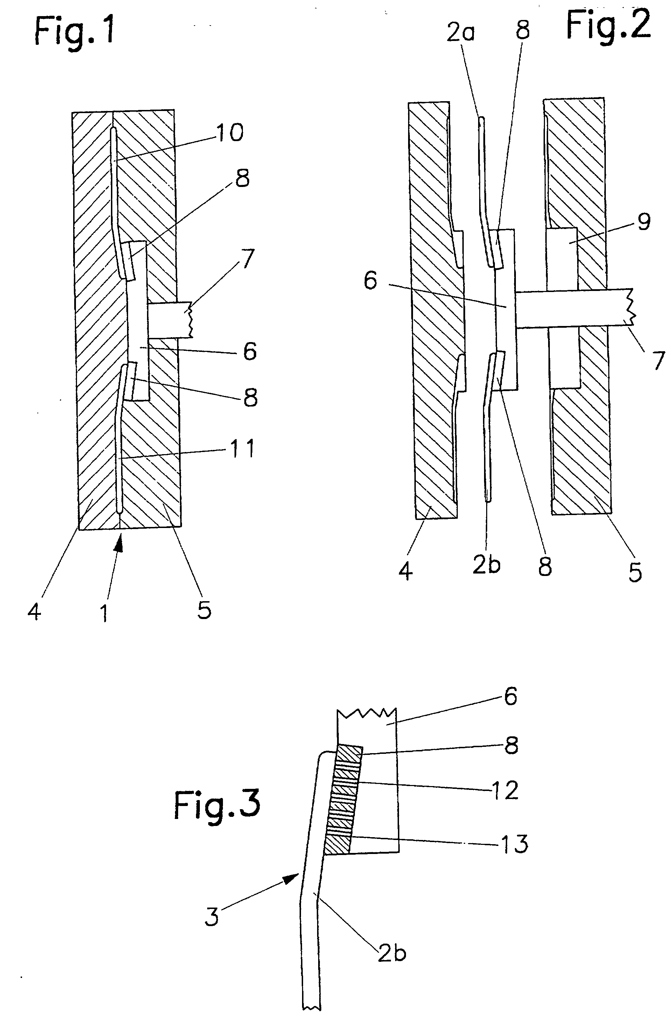

In der Fig. 1 der Zeichnung ist ein Spritzgußwerkzeug 1 gezeigt, welches im gewählten Ausführungsbeispiel zur Herstellung der Bürstenkörper 2b von Zahnbürsten 3 dient (Fig. 3), wobei der Bürstenkörper 2b aus zwei unterschiedlichen Kunststoffkomponenten besteht. Das Spritzgußwerkzeug 1 kann in an sich bekannter, nicht dargestellter Weise in eine Spritzgußmaschine eingebaut werden und besteht im dargestellten Ausführungsbeispiel aus einer ortsfesten Formplatte 4, die mit den Düsen zweier nicht dargestellter Spritzeinheiten verbunden ist, und einer verschiebbaren, auswerferseitigen Formplatte 5. Zwischen den beiden Formplatten 4, 5 befindet sich ein Träger 6, der einerseits fest mit einer Welle 7 verbunden ist und der andererseits zwei Borstenhalterungen 8 leicht auswechselbar aufnimmt. Die Welle 7 ist nicht nur drehbar, sondern auch axial verschiebbar gelagert und kann aus ihrer in Fig. 1 dargestellten Lage in die Stellung gemäß Fig. 2 und zurück bewegt werden. Bei dieser axialen Bewegung wird auch der Träger 6 mit den beiden Borstenhalterungen 8 mitbewegt. Der Drehantrieb der Welle 7 ist so ausgestaltet, daß der Träger 6 im dargestellten Ausführungsbeispiel entweder schrittweise um 180° in gleicher Richtung oder nur um 180° in eine Richtung und dann zurück bewegt werden kann. In Abhängigkeit von der Ausgestaltung der beiden Formplatten 4, 5 sind auch Drehbewegungen von 60°, 90° oder 120° möglich. Der Dreh- und Verschiebeantrieb der Welle 7 ist an sich bekannt und daher zur besseren Deutlichkeit in der Zeichnung nicht dargestellt. Die Welle 7 ragt durch die verschiebbare Formplatte 5, die andererseits auch eine Aussparung 9 zur Aufnahme des Trägers 6 samt den Borstenhalterungen 8 bei geschlossenem Spritzgußwerkzeug 1 (Fig. 1) besitzt.

Sowohl in der ortsfesten als auch in der beweglichen Formplatte 4, 5 sind in Verbindung mit den Borstenhalterungen 8 sich gegenüberliegend angeordnete Aussparungen vorgesehen, die bei geschlossenem Spritzgußwerkzeug 1 die Formhohlräume bzw. Formnester 10, 11 bilden.

Wie bereits weiter oben ausgeführt, dient das Spritzgußwerkzeug 1 zur Herstellung von aus zwei Kunststoffkomponenten bestehenden Bürstenträgern 2b von Zahnbürsten 3. Dies hat zur Folge, daß die Formnester 10, 11 auch unterschiedlich ausgebildet sind, was jedoch in der Zeichnung nicht dargestellt ist. Wenn in die Formnester 10 die erste Kunststoffkomponente eingespritzt wird, wird in die Formnester 11 an den bereits vorgespritzten Bürstengrundkörpern 2a die zweite Kunststoffkomponente nach- bzw. aufgespritzt. Dabei wird ausdrücklich darauf hingewiesen, daß es grundsätzlich möglich ist, mehr als zwei Kunststoffkomponenten nacheinander in einer entsprechenden Anzahl von Spritzvorgängen zu verarbeiten. Bei mehr als zwei Kunststoffkomponenten ist es zweckmäßig, die Formnester 10, 11 nicht um 180° gegeneinander versetzt, sondern in einer anderen Winkellage zueinander anzuordnen.

An dieser Stelle sei auch erwähnt, daß in der Praxis mehrere Formnester 10 und 11, nebeneinander angeordnet sind, denen jeweils vielfach eine gemeinsame Borstenhalterung 8 zugeordnet ist. Auch mehrere Borstenhalterungen 8 können vorgesehen sein. In den Fign. 1 und 2 der Zeichnung ist jedoch in der dargestellten Lage der Schnitt jeweils nur durch ein Formnest 10, 11 gelegt, d.h., die weiteren Formnester 10, 11 befinden sich senkrecht zur Zeichnungsebene nebeneinander. Die Formnester 10, 11 sind schließlich so in dem Spritzgußwerkzeug 1 bzw. den Formplatten 4, 5 angeordnet, daß die Bereiche, in denen die Borstenbündel 12 zur Bildung der Borstenfelder angeordnet sind, einander benachbart sind. Im dargestellten Ausführungsbeispiel sind also die sogenannten Kopfenden der Zahnbürsten 3 bzw. der Formnester 10, 11 gegeneinander gerichtet, wie dies die Fign. 1 und 2 der Zeichnung klar erkennen lassen. Auch eine umgekehrte Anordnung ist möglch. Im Bereich der Kopfenden der Zahnbürsten 3 bzw. im Bereich der Borstenfelder der Bürstengrundkörper 2a und der Bürstenkörper 2b begrenzen die Borstenhalterungen 8 die Formnester 10, 11.

Die Borstenhalterungen 8 sind vorzugsweise plattenartig ausgebildet und erstrecken sich senkrecht zur Zeichnungsebene am Träger 6. In den Borstenhalterungen 8 befinden sich eine Vielzahl von Bohrungen 13, die in ihrer Anzahl und Anordnung dem zu erzeugenden Borstenfeld entsprechen. In der Fig. 3 der Zeichnung sind zur besseren Darstellung nur vier Bohrungen 13 gezeigt. Diese Bohrungen 13 nehmen die bereits erwähnten und zur besseren Deutlichkeit nur durch je zwei Borsten angedeuteten Borstenbündel 12 auf. Dabei werden die Borstenbündel 12 so in die Bohrungen 13 der Borstenhalterung 8 eingesetzt, daß dieselben um einen vorbestimmten Betrag in die Formnester 10 ragen. Die Bestückung der Borstenhalterungen 8 mit den Borstenbündeln 12 kann in vorteilhafter Weise außerhalb des Spritzgußwerkzeuges 1 erfolgen. Dies be-deutet, daß die Borstenhalterungen 8 leicht auswechselbar am Träger 6 befestigt sind.

Für die Erläuterung der Arbeitsweise der vorbeschriebenen Vorrichtung wird nun davon ausgegangen, daß im Bereich der ersten Gruppe von Formnestern 10 eine Borstenhalterung 8 eingesetzt ist, die mit Borstenbündeln 12 gemäß Fig. 3 bestückt ist und bei der die Borstenbündel 12 geringfügig in die Formnester 10 ragen. Jetzt wird die Gruppe von Formnestern 10 in einem Spritzvorgang mit der ersten Kunststoffkomponente, die den sogenannten Bürstengrundkörper 2a bildet, ausgefüllt bzw. ausgespritzt. Bei diesem Spritzvorgang verbinden sich die aus der Borstenhalterung 8 vorstehenden Borstenbündel 12 mit den Bürstengrundkörpern 2a. Nach einer gewissen Abkühlzeit wird zunächst die verschiebbare Formplatte 5 in die Stellung gemäß Fig. 2 bewegt. Gleichzeitig mit dieser Bewegung oder kurz danach, wird die Welle 7 und damit der Träger 6 ebenfalls in die Lage gemäß Fig. 2 geschoben. Dadurch bedingt, daß die Borstenbündel 12 reibschlüssig in der Borstenhalterung 8 angeordnet sind, werden bei dieser Bewegung die in der ersten Gruppe von Formnestern 10 gespritzten Bürstengrundkörper 2a aus den Aussparungen der ortsfesten Formplatte 4 mit herausbewegt, wie dies die Fig. 2 zeigt. In der gezeigten Lage des Trägers 6 gemäß Fig. 2 kann derselbe in seinem unteren Bereich mit einer neuen, mit Borstenbündeln 12 versehenen Borstenhalterung 8 bestückt werden. Jetzt wird der Träger 6 und damit die Borstenhalterung 8, an der sich die aus der ersten Komponente gespritzten Bürstengrundträger 2a befinden, um einen Winkel von 180° gedreht. Danach nehmen die Bürstengrundkörper 2a eine fluchtende Lage zu den Formnestern 11 bzw. deren Aussparungen in den Formplatten 4,5 ein. Bei dieser Drehbewegung gelangt die soeben neu eingesetzte Borstenhalterung 8 nach oben in den Bereich der ersten Gruppe der Formnester 10. Bedarfsweise ist es auch möglich, in dieser Lage des Trägers 6, also oben, eine neue Borstenhalterung 8 mit Borstenbündeln 12 einzusetzen.

Nach dieser Drehbewegung wird das Spritzgußwerkzeug 1 wieder geschlossen (Fig.1). Die erste Gruppe von Formnestern 10 ist zunächst leer, während sich in der zweiten Gruppe von Formnestern 11 die bereits aus der ersten Kunststoffkomponente gespritzten Bürstengrundkörper 2a befinden. Da die zweite Gruppe von Formnestern 11, wie bereits erwähnt, eine andere Kontur als die erste Gruppe von Formnestern 10 besitzt, kann hier jetzt die zweite Kunststoffkomponente eingespritzt werden. Bei diesem Spritzvorgang wird gleichzeitig in die erste Gruppe von Formnestern 10 erneut die erste Kunststoffkomponente eingespritzt. Nach diesem, vorzugsweisen parallel verlaufenden Spritzvorgang, wird das Spritzgußwerkzeug 1 wieder, wie bereits beschrieben, geöffnet. Die untere Borstenhalterung 8 trägt nun fertige Bürstenkörper 2b aus den beiden Kunststoffkomponenten, während die obere Borstenhalterung 8 über die Borstenbündel 12 die Bürstengrundkörper 2a aus der ersten Kunststoffkomponente trägt. Nachdem nun die an der unteren Borstenhalterung 8 befindlichen, fertigen Bürstenkörper 2b bzw. Zahnbürsten 3, beispielsweise durch eine Hilfsvorrichtung und entweder getrennt oder zusammen mit der Borstenhalterung 8 vom Träger 6 entfernt wurden, kann hier eine neue Borstenhalterung 8 mit Borstenbündeln 12 eingesetzt und der beschriebene Verfahrensablauf wiederholt werden.

Aus der vorstehenden Erläuterung des Verfahrensablaufes ergibt sich, daß die aus der ersten Kunststoffkomponente gebildeten Bürstengrundkörper 2a ausschließlich durch die in den Bohrungen 13 der Halterung 8 befindlichen Borstenbündel 12 aus der ersten Spritzstellung in die zweite Spritzstellung bewegt bzw. transportiert werden. Um sicherzustellen, daß die Borstenbündel 12 ihre Lage in den Bohrungen 13 nicht unbeabsichtigt verändern oder verlassen können, kann jeder Borstenhalterung 8 eine besondere Sicherungseinrichtung, beispielsweise ein Klemmbügel oder dgl., zugeordnet sein. Ferner ist es in Abänderung des erläuterten Ausführungsbeispieles möglich, die Borstenhalterungen 8 im Spritzgußwerkzeug 1 - natürlich im geöffneten Zustand desselben - mit Borstenbündel 12 zu bestücken bzw. zu beborsten. Das Entfernen der Borstenhalterungen 8 und das getrennte Beborsten derselben kann dann jedoch entfallen.

## Patentansprüche

1. Verfahren zur Herstellung von bereichsweise aus mindestens zwei Kunststoffkomponenten gebildeten Bürstenkörpern (2b) mit einem mehrere Borstenbündel (12) aufweisenden Borstenfeld, für Zahnbürsten oder dergleichen Borstenwaren, mit einem Spritzgußwerkzeug (1), das zumindest zwei Gruppen von Formnestern (10,11) aufweist, wobei zumindest eine Borstenhalterung (8) an einem bewegbaren Träger (6) aufgenommen ist, und wobei die Borstenbündel in der Borstenhalterung (8) angeordnet sind, um die Borstenbündel (12) im Bereich des Borstenfeldes eines Bürstengrundkörpers (2a) zu halten, und wobei die Borstehalterung (8) gemeinsam mit dem bewegbaren Träger (6) in eine Ausnehmung (9) des Spritzgußwerkzeuges (1) eingesetzt wird, zum Spritzen des Bürstengrundkörpers (2a) aus einer ersten Kunststoffkomponente,
anschließend der Bürstengrundkörper (2a) durch den Träger (6) und die an diesem aufgenommene Borstenhalterung (8), die über die Borstenbündel (12) den Bürstengrundkörper (2a) hält, zu der zweiten Gruppe von Formnestem (11) bewegt wird, und
Einspritzen der zweiten Kunststoffkomponente in die zweite Gruppe Formnester(11) zur Bildung des bereichsweise aus mindestens zwei Kunststoffkomponente bestehenden Bürstenkörpers (2b).

2. Verfahren nach Anspruch 1, **dadurch gekennzeichnet, daß** die
Borstenhalterung (8) innerhalb des Spritzgußwerkzeuges (1) mit Borstenbündeln bestückt wird.

3. Verfahren nach Anspruch 1, **dadurch gekennzeichnet, daß** die
Borstenhalterung (8) außerhalb des Spritzgußwerkzeuges (1) mit den Borstenbündeln (12) bestückt wird.

4. Verfahren nach mindestens einem der Ansprüche 1 bis 3, **dadurch gekennzeichnet, daß** die Borstenbündel (12) in der Borstenhalterung (8) gegen eine axiale Verschiebung gesichert werden.

5. Vorrichtung zur Herstellung von Bürstenkörpem (2b), zur Durchführung des Verfahrens nach zumindest einem der Ansprüche 1 bis 4, mit:
einem Spritzgußwerkzeug (1), das zumindest zwei Gruppen von Formnestern (10,11) aufweist,
einen in dem Spritzgußwerkzeug (1) bewegbaren Träger (6) zur Aufnahme zumindest einer Borstenhalterung (8), die eine Mehrzahl von Borstenlöchern (13) entsprechend der Anzahl und Anordnung von Borstenbündeln (12) in einem Borstenfeld des Bürstenkörpers (2b) aufweist, wobei die Borstenlöcher (13) die Borstenbündel (12) sicher aufnehmen, und wobei der Träger (6) in eine Ausnehmung (9) einsetzbar ist, zum Bewegen von in den ersten Formnestern (10) spritzgegossenen Borstengrundkörpern (2a) zu der zweiten Gruppe von Formnestern (11).

6. Vorrichtung nach Anspruch 5, **dadurch gekennzeichnet, daß** die Borstenhalterung (8) plattenartig ausgebildet ist.

7. Vorrichtung nach Anspruch 5 oder 6, **dadurch gekennzeichnet, daß** die Borstenhalterung (8) auswechselbar an dem Träger (6) befestigt ist.

8. Vorrichtung nach Anspruch 7, **dadurch gekennzeichnet, daß** der Träger (6) dreh- und/oder verschiebbar ausgebildet ist.

9. Vorrichtung nach Anspruch 7 oder 8, **dadurch gekennzeichnet, daß** der Träger (6) in der bewegbaren Formplatte (5) gelagert ist.

10. Vorrichtung nach mindestens einem der Ansprüche 5 bis 9, **dadurch gekennzeichnet, daß** die Borstenhalterung (8) mit einer Sicherungseinrichtung für die Borstenbündel (12) ausgerüstet ist.

## Claims

1. Method for the manufacture of brush bodies (2b) locally formed from at least two plastic components with a bristle array comprising a plurality of bristle tufts (12), for toothbrushes or suchlike bristled articles, with an injection moulding die (1) which has at least two sets of mould cavities (10, 11), wherein at least one bristle holder (8) is seated on a movable carrier (6), and wherein the bristle tufts are arranged in the bristle holder (8) in order to hold the bristle tufts (12) in the region of the bristle array of a basic brush body (2a), and wherein the bristle holder (8) is inserted together with the movable carrier (6) into a recess (9) of the injection moulding die for moulding of the basic brush body (2a) by injection of a first plastic component,
the basic brush body (2a) is then moved by the carrier (6) and the bristle holder (8) seated thereon, which holds the basic brush body (2a) via the bristle tufts (12), to the second set of mould cavities (11), and
injection of the second plastic component into the second set of mould cavities (11) to form the brush body (2b) locally consisting of at least two plastic components.

2. Method according to Claim 1, **characterized in that** the bristle tufts are loaded into the bristle holder (8) inside the injection moulding die (1).

3. Method according to Claim 1, **characterized in that** the bristle tufts are loaded into the bristle holder (8) outside the injection moulding die (1).

4. Method according to at least one of Claims 1 to 3, **characterized in that** the bristle tufts (12) are secured against axial displacement in the bristle holder (8).

5. Apparatus for the manufacture of brush bodies (2b) for carrying out the method according to at least one of Claims 1 to 4, with:
an injection moulding die (1) which has at least two sets of mould cavities (10, 11),
a carrier (6) movable in the injection moulding die (1), to receive at least one bristle holder (8) which has a plurality of bristle holes (13) corresponding to the number and arrangement of bristle tufts (12) in a bristle array of the brush body (2b), wherein the bristle holes (13) receive the bristle tufts (12) securely, and wherein the carrier (6) is insertable into a recess (9) for moving basic [brush] bodies (2a) injection-moulded in the first mould cavities (10) to the second set of mould cavities (11).

6. Apparatus according to Claim 5, **characterized in that** the bristle holder (8) is in the form of a plate.

7. Apparatus according to Claim 5 or Claim 6, **characterized in that** the bristle holder (8) is removably attached to the carrier (6).

8. Apparatus according to Claim 7, **characterized in that** the carrier (6) is rotatable and/or displaceable.

9. Apparatus according to Claim 7 or Claim 8, **characterized in that** the carrier (6) is mounted in the movable moulding plate (5).

10. Apparatus according to at least one of Claims 5 to 9, **characterized in that** the bristle holder (8) is equipped with a securing device for the bristle tufts (12).

## Revendications

1. Procédé pour fabriquer des corps de brosse (2b) qui sont formés, dans certaines zones, d'au moins deux composants de matière plastique et qui comportent une zone de poils présentant plusieurs faisceaux de poils (12), pour des brosses à dents ou des articles à poils similaires, à l'aide d'un moule à injection (1) qui comprend au moins deux groupes d'empreintes (10, 11), étant précisé qu'au moins une fixation pour poils (8) est logée sur un support mobile (6), que les faisceaux de poils sont disposés dans cette fixation (8) afin d'être maintenus dans la région de la zone de poils d'un corps de base de brosse (2a), et que la fixation (8) est placée avec le support mobile (6) dans une cavité (9) du moule à injection (1) en vue du moulage par injection du corps de base de brosse (2a) à partir d'un premier composant en matière plastique,
puis le corps de base de brosse (2a) est amené vers le second groupe d'empreintes (11) grâce au support (6) et à la fixation (8) qui est logée sur celui-ci et qui tient le corps de base (2a) par l'intermédiaire des faisceaux de poils (12),
et on injecte le second composant en matière plastique dans le second groupe d'empreintes (11) pour former le corps de brosse (2b) composé, dans certaines zones, d'au moins deux composants de matière plastique.

2. Procédé selon la revendication 1, **caractérisé en ce que** la fixation (8) est garnie de faisceaux de poils à l'intérieur du moule à injection (1).

3. Procédé selon la revendication 1, **caractérisé en ce que** la fixation (8) est garnie des faisceaux de poils (12) à l'extérieur du moule à injection (1).

4. Procédé selon l'une au moins des revendications 1 à 3, **caractérisé en ce que** les faisceaux de poils (12) sont immobilisés dans la fixation (8) à l'encontre d'un déplacement axial.

5. Dispositif pour fabriquer des corps de brosse (2b) pour mettre en oeuvre le procédé selon l'une au moins des revendications 1 à 4, comprenant :
un moule à injection (1) qui comporte au moins deux groupes d'empreintes (10, 11), et
un support (6) mobile dans le moule à injection (1) et destiné à recevoir au moins une fixation (8) qui présente un nombre de trous pour poils (13) correspondant au nombre et à la disposition de faisceaux de poils (12) dans une zone de poils du corps de brosse (2b), les trous (13) recevant de manière fiable les faisceaux de poils (12), et le support (6) pouvant être placé dans une cavité (9) pour amener vers le second groupe d'empreintes (11) des corps de base de brosse (2a) moulés par injection dans les premières empreintes (10).

6. Dispositif selon la revendication 5, **caractérisé en ce que** la fixation pour poils (8) a la forme d'une plaque.

7. Dispositif selon la revendication 5 ou 6, **caractérisé en ce que** la fixation pour poils (8) est fixée au support (6) de manière à pouvoir être changée.

8. Dispositif selon la revendication 7, **caractérisé en ce que** le support (6) est mobile en rotation et/ou en translation.

9. Dispositif selon la revendication 7 ou 8, **caractérisé en ce que** le support (6) est monté dans la plaque de moulage mobile (5).

10. Dispositif selon l'une au moins des revendications 5 à 9, **caractérisé en ce que** la fixation pour poils (8) est équipée d'un mécanisme de blocage pour les faisceaux de poils (12).
